# EUROPEAN PATENT APPLICATION

(11) **EP 4 675 461 A1**
(43) Date of publication of application: **07.01.2026**
(21) Application number: 24315316.0
(22) Date of filing: 01.07.2024
(51) Int. Cl.: G06F 16/9535, G06F 21/62

(54) **SEARCH REQUEST PROCESSING**

(71) Applicant: Amadeus S.A.S., 06410 Biot (FR)
(72) Inventor: GENTRIC, Philippe, 06410 Biot (FR)
(74) Representative: Samson & Partner Patentanwälte mbB

(57) **Abstract**

Method, systems and computer programs for content provision are provided. A requestor node generates an anonymized and compressed representation of the user profile using a user data embedding machine-learning model inputting user data of a user profile. The content retrieval platform receives the anonymized and compressed representation of the user profile and a content retrieval request and inputs the anonymized and compressed representation of the user profile and the content retrieval request to a content determination machine-learning model to determine content in response to the content retrieval request.

## Description

### FIELD

The present disclosure relates to an information technology method and a system. More specifically, it relates to database search and computation technology providing search results in response to search requests.

### BACKGROUND

Search requests from clients to search systems typically include one or more search parameters and corresponding values which indicate requested search results. A platform processes a search request, identifies one or more search results being in accordance with the search parameter values and returns the search results to the client.

In recent years, there has been a growing demand for personalized content in response to search requests to assist users to find the sought information more efficiently. However, providing tailored content often requires the use of personal and sensitive data, such as user preferences, user profile, history, statistical data, previous purchases and bookings, and medical data. Sharing such sensitive data with external servers raises privacy and security concerns.

Traditional methods for providing personalized content involve the use of cookies or tracking user behavior, which may compromise user privacy. Other methods may require users to manually input their preferences or to perform multiple search iterations to find the desired content. These methods can be time-consuming and inefficient, as well as potentially insecure.

Some prior art solutions attempt to address these concerns by anonymizing personal data before transmitting it to external servers. However, these methods may still not provide the desired level of data security or may result in a loss of personalization accuracy due to the anonymization process.

There is, therefore, a need for a more efficient and secure solution for providing tailored content to clients, which does not require the sharing of sensitive personal data and maintains the accuracy of personalization.

### SUMMARY

The present disclosure seeks to provide improvements of the existing search methodologies, in particular in the area of content retrieval and determination of content to be returned in response to a content retrieval request. The present mechanisms are set forth by the independent claims.

According to a first aspect, a method for content provision performed by a content provision system is provided. The content provision system comprises a content retrieval platform and at least one requestor node, wherein the at least one requestor node hosts a user data embedding machine-learning model and the content retrieval platform hosts a content determination machine-learning model. The at least one requestor node generates, using the user data embedding machine-learning model inputting user data of a user profile, an anonymized and compressed representation of the user profile. The at least one requestor node sends the anonymized and compressed representation of the user profile to the content retrieval platform. The at least one requestor node sends a content retrieval request related to the user profile to the content retrieval platform. The content retrieval platform receives the anonymized and compressed representation of the user profile and the content retrieval request. The content retrieval platform inputs the anonymized and compressed representation of the user profile and the content retrieval request to the content determination machine-learning model to determine content in response to the content retrieval request. The content retrieval platform returns the determined content to the at least one requestor node.

In some embodiments, the content retrieval request is an initial content retrieval request.

The at least one requestor node sends the anonymized and compressed representation of the user profile and an anonymous identification together with the initial content retrieval request to the content retrieval platform. The at least one requestor node sends a further content retrieval request related to the user profile together with the anonymous identification to the content retrieval platform. The content retrieval platform receives the anonymized and compressed representation of the user profile and an anonymous identification together with the initial content retrieval request to the content retrieval platform and stores the anonymous identification together with the anonymized and compressed representation of the user profile. The content retrieval platform receives the further content retrieval request together with the anonymous identification. The content retrieval platform retrieves the stored anonymized and compressed representation of the profile by using the received anonymous identification. The content retrieval platform inputs the retrieved anonymized and compressed representation of the user profile and the further content retrieval request to the content determination machine-learning model to determine content in response to the further content retrieval request.

In some embodiments, the at least one requestor node determines a change of the user data and generates, by using the user data embedding machine-learning model of the at least one requestor node inputting the changed user data, an updated anonymized and compressed representation of the user profile. The at least one requestor node sends a still further content retrieval request together with the updated anonymized and compressed representation of the user profile and the anonymous identification to the content retrieval platform. The content retrieval platform receives the still further content retrieval request together with the updated anonymized and compressed representation of the user profile and the anonymous identification. The content retrieval platform replaces, using the anonymous identification, the stored anonymized and compressed representation of the user profile with the received updated anonymized and compressed representation of the user profile. The content retrieval platform inputs, the updated anonymized and compressed representation of the user profile and the still further content retrieval request to the content determination machine-learning model to determine content in response to the still further content retrieval request.

In some embodiments, the at least one requestor node comprises at least one of an end user device, a smartphone, an intermediate provider platform communicatively coupled to at least one client device, a cloud computing service.

In some embodiments, the user data of the user profile is indicative of earlier content retrieval requests, generated and returned content in response to the earlier content retrieval requests, client selections of the generated and returned content in response to the earlier content retrieval requests.

In some embodiments, the anonymized and compressed representation of the user profile comprises a multi-dimensional feature vector with a value per dimension, wherein each value of the feature vector is indicative of a parameter of the user profile, a user preference, or an absence of a user profile parameter or of a user preference.

In some embodiments, the user data embedding machine-learning model is trained at the at least one requestor and the content determination machine-learning model is trained at the content retrieval platform.

According to a second aspect, a content provision system is provided which comprises a content retrieval platform and at least one requestor node. The at least one requestor node hosts a user data embedding machine-learning model and the content retrieval platform hosts a content determination machine-learning model. The at least one requestor node is arranged to generate, by using the user data embedding machine-learning model inputting user data of a user profile of the requestor node, an anonymized and compressed representation of the user profile. The at least one requestor node is arranged to send the anonymized and compressed representation of the user profile to the content retrieval platform and to send a content retrieval request related to the user profile to the content retrieval platform. The content retrieval platform is arranged to receive the anonymized and compressed representation of the user profile and the content retrieval request. The content retrieval platform is arranged to input the anonymized and compressed representation of the user profile and the content retrieval request to the content determination machine-learning model to determine content in response to the content retrieval request and to return the determined content to the at least one requestor node.

In some embodiments, the content retrieval request is an initial content retrieval request and wherein the at least one requestor node is arranged to send the anonymized and compressed representation of the user profile and an anonymous identification together with the initial content retrieval request to the content retrieval platform. The at least one requestor node is arranged to send a further content retrieval request related to the user profile together with the anonymous identification to the content retrieval platform. The content retrieval platform is further arranged to receive the anonymized and compressed representation of the user profile and an anonymous identification together with the initial content retrieval request to the content retrieval platform and store the anonymous identification together with the anonymized and compressed representation of the user profile. The content retrieval platform is further arranged receive the further content retrieval request together with the anonymous identification and to retrieve the stored anonymized and compressed representation of the user profile by using the received anonymous identification. The content retrieval platform is further arranged input the retrieved anonymized and compressed representation of the user profile and the further content retrieval request to the content determination machine-learning model to determine content in response to the further content retrieval request.

In some embodiments, the at least one requestor node is further arranged to determine a change of the user data of the user profile and to generate, by using the user data embedding machine-learning model inputting the changed user data of the user data, an updated anonymized and compressed representation of the user profile. The at least one requestor node is further arranged to send a still further content retrieval request related to the user profile together with the updated anonymized and compressed representation of the profile and the anonymous identification to the content retrieval platform. The content retrieval platform is further arranged to receive the still further content retrieval request together with the updated anonymized and compressed representation of the user profile and the anonymous identification and to replace, using the anonymous identification, the stored anonymized and compressed representation of the user profile with the received updated anonymized and compressed representation of the user profile. The content retrieval platform is further arranged to input the updated anonymized and compressed representation of the user profile and the still further content retrieval request to the content determination machine-learning model to determine content in response to the still further content retrieval request.

In some embodiments, the at least one requestor node comprises at least one of an end user device, a smartphone, an intermediate provider communicatively coupled to at least one the client device, a cloud computing service.

In some embodiments, the user data of the user profile is indicative of earlier content retrieval requests, generated and returned content in response to the earlier content retrieval requests, client selections of the generated and returned content in response to the earlier content retrieval requests.

In some embodiments, the anonymized and compressed representation of the user profile comprises a multi-dimensional feature vector with a value per dimension, wherein each value of the feature vector is indicative of a parameter of the user data, a user preference, or an absence of a user profile parameter or of a user preference.

In some embodiments, the user data embedding machine-learning model is trained at the at least one requestor and the content determination machine-learning model is trained at the content retrieval platform.

Finally, a computer program is presented that comprises instructions which, when the program is executed by a computer, cause the computer to carry out the aforementioned method aspect and embodiments when executed by the computer. The computer program instructions may be stored on a computer-readable storage medium which is read by the computer in order to execute the instructions.

Further refinements are set forth by the description.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 illustrates a distributed content provision system as described herein.
FIG. 2 shows internal components of a content request node and a content retrieval platform of the content provision system.
FIG. 3 depicts activities performed at the content requestor node and at the content retrieval platform.
FIG. 4 is a message sequence chart visualizing a content retrieval process according to methodologies presented herein.
FIG. 5 relates to retrieval-augmented content generation which may be utilized in some embodiments.
FIG. 6 relates to a unique user token representing a UDE vector stored in a UDE cache at the content retrieval platform.
FIG. 7 visualizes usage of the user token at the message exchange level.
FIG. 8 depicts functionality for updating user data and UDE vector.
FIG. 9 shows the UDE update process in terms of message exchange between requestor node and content retrieval platform.
FIG. 10 is a diagrammatic representation of the internal components of a computing device as described herein.

### DETAILED DESCRIPTION

The present disclosure addresses a technical problem in information technology, and more specifically in content provision systems which process content retrieval requests from a requestor node. A content retrieval request sent by and received from a requestor node includes one or more search parameters, i.e. one or more parameter-value pairs, which indicate a strict or fuzzy search space limitation. The content provision system is arranged to process the content retrieval request in particular by determining a number of search results which correspond to the parameter value pairs in the content provision request and returning the search results. In order to fulfil this functionality, the content provision system typically includes one or more content retrieval platforms, e.g. a computerized machine, equipped with hardware and software to process the search request, take measures to identify search results corresponding to the search parameters and to return, if at least one search result has been identified, the at least one search result to the requestor.

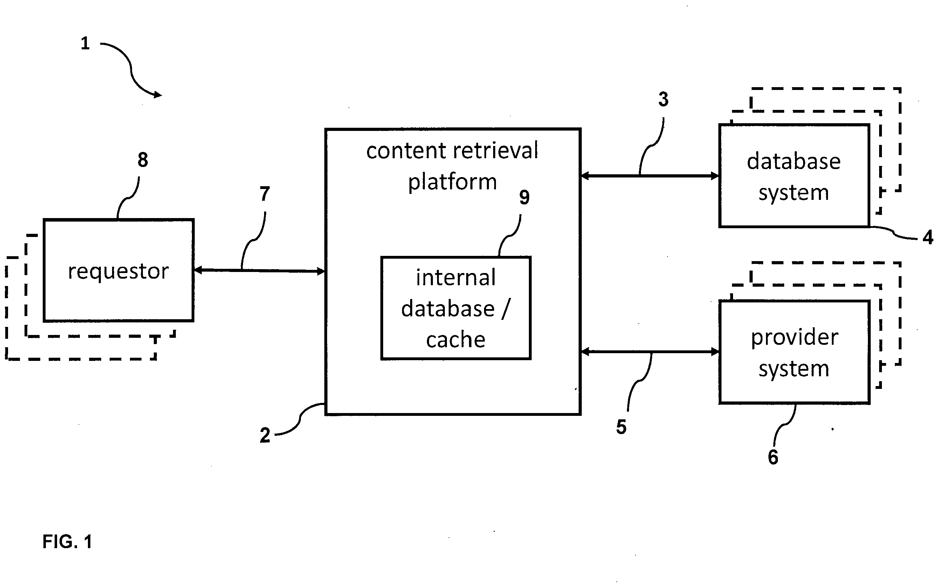

A typical, simplified and schematic content provision system 1 is shown by FIG. 1. The content provision system 1 includes a content retrieval platform 2 which is communicatively coupled to one or more requestor nodes 8 over a communication interface 7. Content retrieval requests from the requestor node(s) 8 and responses to the content retrieval requests are sent over the communication interface 7. The communication interface 7 may utilize any sorts of communication technology such as wired and/or wireless communication and/or mobile communication networks, one or more local area network, and/or one or more wide area networks such as the Internet, as well as any sorts of communication protocols such as WiFi, Ethernet, Internet Protocol (IP), Transport Control Protocol (TCP), Hypertext Transfer Protocol (HTTP) and others. The requestor nodes 8 may be individual computing machines such as personal computers, mobile stations such as laptops or tablet computers, smartphones, and the like, as well as, in some embodiments, more powerful machines such as database application servers, distributed database systems respectively comprising multiple interconnected machines, data centers, etc. In some embodiments, the at least one requestor node 8 comprises at least one of an end user device, a smartphone, an intermediate provider communicatively coupled to any number of end clients, a cloud computing service.

Typically, the content retrieval platform 2 may serve as a frontend towards the requestors 8 and may therefore have access to backend data sources which may be geographically and/or operationally co-located with the content retrieval platform 2. For example, the content retrieval platform 2 may store pre-computed and/or pre-collected response data in a cache 9 and/or may be communicatively coupled, via a further communication interface 3, to one or more database systems 4 storing or being arranged to dynamically compute search result data. Depending on the particular use case, contacting the database systems 4 may involve relatively little overhead, for example, because the database systems 4 are geographically closely located with the content retrieval platform 2 or may be operated by the same content provider as the content retrieval platform 2.

On the other hand, the content retrieval platform 2 may also be coupled to one or multiple backend provider system(s) 6 which are typically geographically and technical dislocated or distributed and operated by different content providers. Response times for retrieving response content from the provider systems 6 may vary as they depend on technical factors such network connection bandwidth and throughput of the communication interface(s) 5 coupling the frontend content retrieval platform 2 with the backend provider systems 6 as well as computational resources and performance of the provider systems 6. The content retrieval platform 2 may collect content retrieval results from any one of the content sources cache 9, databases 4 and provider systems 6.

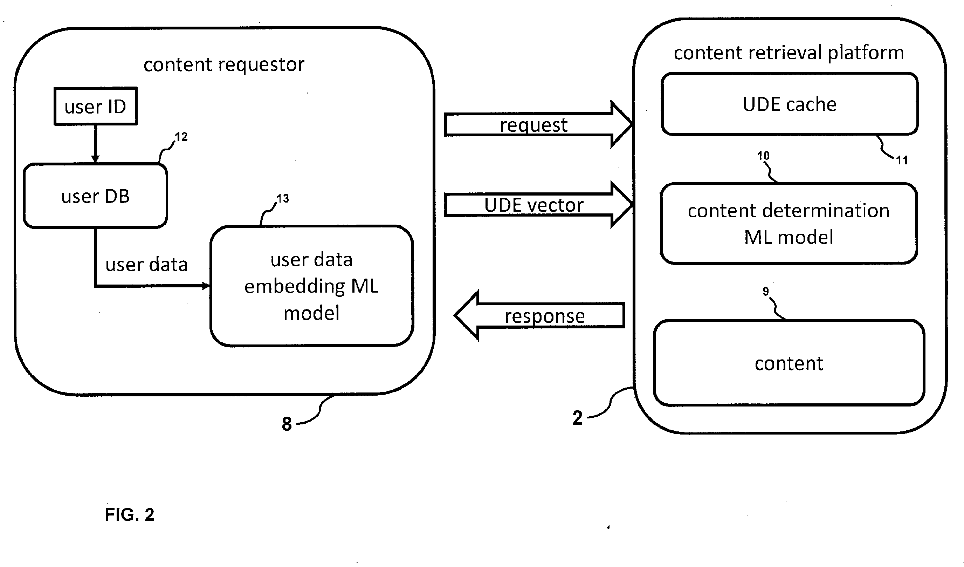

A more fine-grained (partial) system view is given by FIG. 2. According to the present disclosure, at least one requestor node 8 hosts a user data embedding machine-learning model and the content retrieval platform 2 hosts a content determination machine-learning model. Each of these two models individually contribute to an efficient processing of content retrieval requests and both models interworking together provide an efficient processing of content retrieval requests.

To first discuss the side of the content requestor node 8, FIG. 2 shows a content requestor node 8 which includes the user data embedding (UDE) machine-learning (ML) model 13. The UDE ML model 13 inputs user data derived from a user database 12 which is hosted at or accessible by the content requestor node 8. The user database 12 maintains user-related data such as a user profile, user preferences, etc. The user database 12 may also hold historic data representing past user behavior, such user data being indicative of earlier content retrieval requests, generated and returned content in response to the earlier content retrieval requests, client selections of the generated and returned content in response to the earlier content retrieval requests. Although the term "database" may be understood broadly in the sense of any structure storage of data, the user-related data maintained in the user database 12 is of a predetermined data format such as a number of database records, vectors, Protocol Buffers, tables, and the like.

Depending on the use case, the content requestor node 8 may be an end user device which is operated by one and the same user all the time, so that the user database 12 maintains profile and/or preference data of that particular user. In other use cases, the content requestor node 8 may also be a device or system shared by multiple or many users in which case the user database 12 may host user data of these multiple or many users. User data of an individual user may be identifiable and accessible by way of a user identifier (user ID). The UDE ML model 13 outputs a UDE vector representing all or a part of the user data of the user to which a content retrieval request is related.

The UDE ML model 13 may be trained at the requestor node 8. Ideally, the UDE ML model 13 may be trained at a requestor node 8 which has historic user data stored or accessible from multiple different users. For example, the requestor nodes 8 may themselves be a member of a certain provider which directs content retrieval requests to the content retrieval platform 8 in order to provide such requested content to end users. Such requestor nodes 8 of intermediary providers may have a significant amount of historic data of many users available for training the UDE ML model 13. The UDE ML model 13 may then, after training based on the historic data of the intermediary provider, be provided to multiple or all requestor nodes 8 of the same intermediary provider. In addition or in the alternative, synthetic data representing many virtual users may be built in order to provide a suitable amount of training data for the UDE ML model 13.

At the content retrieval platform 2, the content determination ML model 10 may be arranged to input a UDE vector received from the content requestor node 8 in order to consider the user context given by the user data which is, in turn, represented by the UDE vector. Optionally, in some embodiments, the content retrieval platform 2 also hosts a UDE cache 11 which holds UDE vectors previously received from any content request node 8. As mentioned above, the content retrieval platform 2 may also include a content source such as a database and/or cache 9, in order to prepare response data for a content retrieval request to be returned to the content requestor node 8 by way of a content retrieval response.

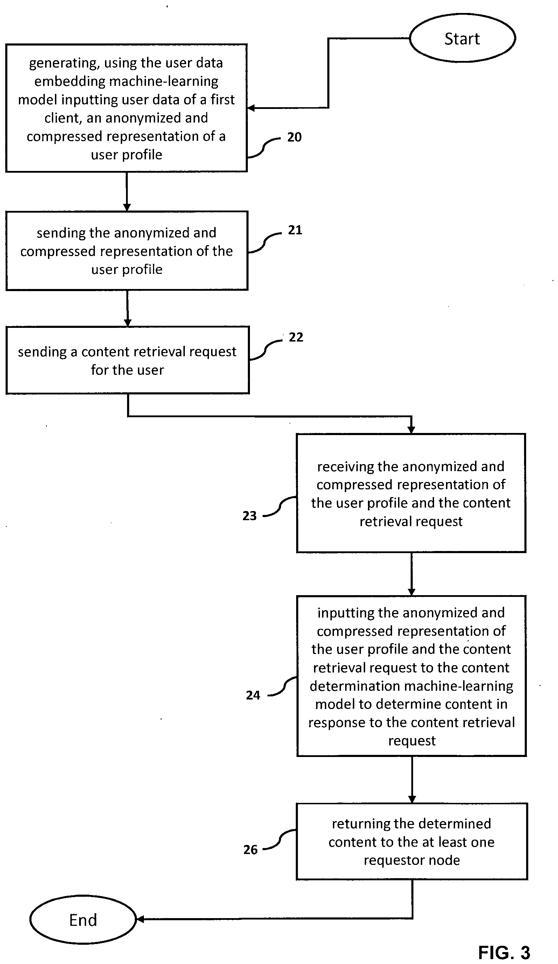

With respect to **FIG. 3****,** a flow of method steps shows the utilization of the components of **FIG. 2****.** The left-hand side of **FIG. 3** shows activities at the content requestor node 8, while the right-hand side visualizes activities at the content retrieval platform 2.

The at least one content requestor node 8 generates 20, by using the UDE ML model 13 inputting user data of a first client of the requestor node 8, an anonymized and compressed representation of a user profile. In some embodiments, this anonymized and compressed representation of a user profile comprises a multi-dimensional feature vector with a value per dimension, wherein each value of the feature vector is indicative of a parameter of the user profile (e.g. personal data of the user, configurations of the user, etc.), a preference of the user, or an absence of a user profile parameter or user preference. Thus, typically, the UDE vector is a multi-dimensional feature vector that represents a user profile or at least parts of a user profile in an anonymized format. The term high-dimensional feature vector refers to a list with multiple entries, each list entry representing a value of a user data such as a particular preference, configuration item, etc. Examples of UDE vectors are given further below. The term profile refers to any user data identifying the user and indicating or representing preferences of the users which may be relevant for a content retrieval context. As mentioned above, such user data may be indicative of earlier content retrieval requests, generated and returned content in response to the earlier content retrieval requests, client selections of the generated and returned content in response to the earlier content retrieval requests. The user data stored in the user database 12 of the requestor node 8 may particularly include sensitive personal data which is not be shared in the clear (i.e. uncoded, unencrypted, non-secured transmission) with any service platforms such as the content retrieval platform 2.

As mentioned above, the generation 20 is carried out by the UDE ML model 13 that operates on the requestor node 8, such as a smartphone or a server. The requestor node 8 processes the user's data through the UDE ML model 13 to produce the UDE vector. The objective is to create a secure representation of the user's profile that can be utilized by the content retrieval platform 2 to tailor content retrieval responses. More specifically, the UDE ML model 13 transforms user data into a non-identifiable and compact vector by embedding the user data into a multi-dimensional space. Each dimension within this space corresponds to a specific characteristic or preference of the user, with e.g. Boolean values indicating the presence or absence of certain data points. The UDE ML model 13 is capable of handling various data types and is designed to ignore parameters that are not present or are unsupported by the client. The transformation of user data into the UDE vector ensures that the vector can be transmitted to a content retrieval platform 2 without revealing the actual user data, as the UDE vector is designed to be non-reversible.

The input vector to the UDE ML 13 is preferably standardized across user profiles of the requestor nodes, with indexed parameters to avoid collisions and allow for additional parameters that are unique to specific requestor nodes, types of requestor nodes, users or groups of users. In other words, the input vectors to the UDE ML 13 to determine UDE vectors are according to a defined data model across a number of requestor nodes which share the same UDE ML 13 and which have a common counterpart content determination model 10 at the side of the content retrieval platform 2. As explained further below, the UDE vector can be stored and associated with an anonymous token, which acts as a key for subsequent retrieval requests. This setup allows the content retrieval platform 2 to determine a user context for content determination while preserving the anonymity of the user's data.

In some embodiments, input vectors for the UDE ML model 13 may be in accordance with a given data definition, e.g. at least one of a parameter index, parameter type, parameter description, parameter value. The index denotes a unique identifier for the user data parameter. The type defines the data type of the user data parameter. The description allows to provide a human-readable definition of the parameter. The value specifies the particular user data. Examples of input vector user data are:
Index = 1, Type = text, Description "user name", Value = Albert Einstein
Index = 2, Type = categorical, Description "gender", Value = male
Index = 3, Type = date, Description "date of birth", Value = 14 March 1879

Then, typically, multiple or even many more parameters specifying user preferences, configurations, etc. follow, for example:
Index =25, Type = categorical, Description "preferred color", Value: blue
Index =345, Type = Boolean, Description "is vegetarian", Value: yes

Parameters which are defined, but for which the user data does not contain any entries may be marked with a NULL value as being absent, for example:
Index =456, Type = categorical, Description "credit card number", Value: NULL

The UDE ML model 13 then encodes such input vector (user data in the clear, i.e. uncoded, unencrypted, non-secured) and outputs a multi-dimensional vector of values to constitute a UDE vector. For example, the UDE vector is composed of a long, ordered string of numbers, wherein each of the numbers is a representation of one input vector entry (e.g. 5, 8, 9, 3, 23, 65, 0, 3, 5). Each value generated by the UDE ML model 13 may represent an element of the input vector. For example, the first value '5' of the UDE vector may stand for the first element of the input vector with index=1, the second value '8' for the second element of the input vector with index=2, and so on.

Predetermined values of the UDE vector may indicate an absence of a corresponding element of the input vector. For example, the seventh value '0' may indicate that the element with index=7 is absent in the input vector, i.e. no user data is available for this user data parameter. The value '0' is a non-limiting example. Other reserved values may be used in embodiments, e.g. a 'NULL' value or a reserved symbol (e.g. '%'). Likewise, predetermined values may indicate that the corresponding element of the input vector is present, but not known. For example, the user may have defined that certain parts of sensitive user data may be excluded from the user data embedding. Thus, a predetermined value (e.g. a certain reserved symbol such as '∞') may indicate that user data generally exist for such parameters, but have not been included in the UDE vector.

The content requestor node 8 sends 21 the anonymized and compressed representation of the user profile, i.e. the UDE vector, to the content retrieval platform 2. The content requestor node 8 sends 22 a content retrieval request for the user to the content retrieval platform 2. The content retrieval request indicates more or less specific content needs by conveying the search parameters specifying the search space for the sought content. This activity triggers a process of content determination at the content retrieval platform 2.

Processing the content retrieval request sent by the content requestor node 8 seeks to reduce the need for multiple search iterations. This efficiency is achieved by leveraging the previously generated UDE vector, which encapsulates the user's personal and sensitive data in an anonymized form. Transmission 21 of the UDE vector and transmission 22 of the content retrieval request by the content requestor node 8 occur together, e.g. by piggy-backing the UDE vector as data of the content retrieval request. In other situations, the UDE vector may have been transmitted 21 prior to the content retrieval request and may already be available at the content retrieval platform 2 for processing the content retrieval request.

The content retrieval platform 2 receives 23 the anonymized and compressed representation of the user profile (UDE vector) and the content retrieval request. The content retrieval platform 2 inputs 24 the anonymized and compressed representation of the user profile and the content retrieval request to the content determination machine-learning model 10 to determine content in accordance with the content retrieval request and to return 26 the determined content to the at least one requestor node 8.

Activity 23 encompasses the process of the content retrieval platform 2 receiving two types of data from the requestor node: the anonymized and compressed representation of the user profile (UDE vector), and the content retrieval request. The reception of the UDE vector involves the content retrieval platform 2 utilizing its communication interface 7 to accept the UDE vector transmitted by the requestor node 8. Concurrently or separately, the content retrieval request is received by the content retrieval platform 2. As mentioned above, this request includes parameters that specify the content sought by the requestor node 8 and/or its user.

Upon receipt, the content retrieval platform 2 inputs 24 the UDE vector and the content retrieval request into the content determination ML model 10. As briefly mentioned before, this model is designed to process the input data and determine content that aligns with the user's profile as represented by the UDE vector and the parameters of the content retrieval request. The content determination ML model 10 may employ various machine learning techniques, such as gradient boosted trees or deep neural networks, tailored to the specific use case. The content determination ML model 10 may be trained at the content retrieval platform 2 e.g. using historical data available at the content retrieval platform 2, which includes previous content retrieval requests, provided content responses, and feedback such as any follow-up content retrieval requests, selections among returned content results, bookings, and purchases.

The content determination ML model 10 analyzes the UDE vector to understand the user preferences and characteristics without needing to access actual personal data. The content determination ML model 10 then uses these determined preferences in conjunction with the content retrieval request to identify and prioritize content that corresponds to the content retrieval request and the determined user preferences.

The output from the content determination ML model 10 is a set of content results. The content results may include a variety of formats such as data records, data files, web pages, product listings, recommendations, or other types of information that the user was seeking. The format and structure of the transmitted content can vary and may include elements such as metadata, links, images, and textual descriptions.

These content results are then returned 26 to the requestor node 8, i.e. the content retrieval platform 2 sends the content results for the content retrieval request back to the content requestor node 8 after determining the relevant content based on a previously received content retrieval request and an anonymized user profile vector (UDE vector). The content retrieval platform 2 performs this activity to complete the cycle of a content retrieval interaction initiated by the requestor node 8. In this manner, step 108 ensures that the system uses the available processing resources efficiently to determine the sought content while maintaining the privacy of the user's sensitive data.

In embodiments, to additionally promote privacy of sensible user data, encryption schemes may be utilized to protect the transmission of the UDE vector over the interfaces between the requestor 8 and the content retrieval platform 2. For example, transport layer security (TLS) may be used to protect the transmission of the UDE vector, the user token (cf. below), the content retrieval requests 22 and/or the content responses 26.

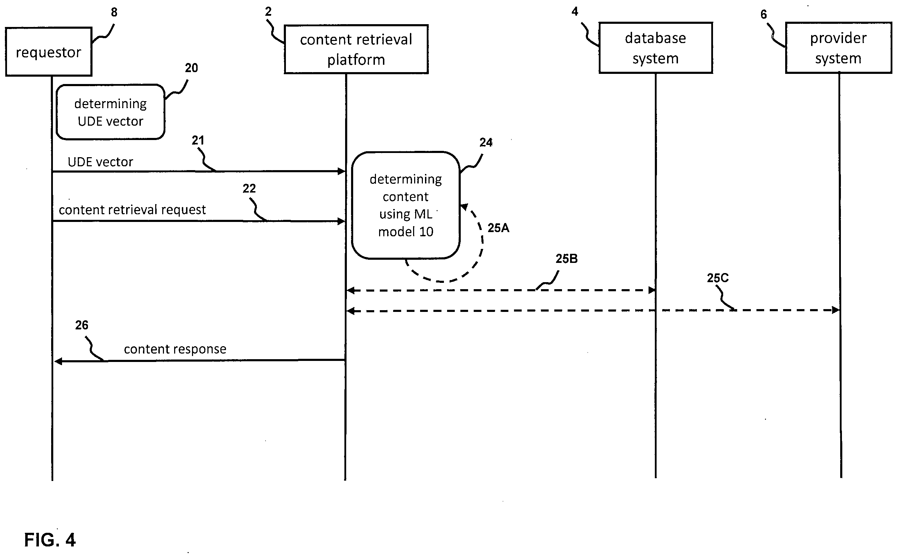

Another representation of these methodologies is given by the message sequence chart of **FIG. 4****.** As already described above, the requestor node 8 generates 20 a UDE vector representing personal user data such as user preferences, profile data, etc. The requestor node 8 then transmits 21 the generated UDE vector to the content retrieval platform 2. In addition, the requestor node transmits 22 a content retrieval request to the content retrieval platform 2. Both information are received by the content retrieval platform in separate messages or in a common message. The content retrieval platform 2 the determines, using both information with content determination ML model 10, content corresponding to the parameters of the content retrieval request and the UDE vector. Optionally, in addition, content determination may also include retrieving or computing 25A, 25B, 25C a part of the content from one or more of the cache 9, the database system 4 and the provider system 6.

Still with continued reference to both, **FIG. 3** and **FIG. 4****,** some implementation options of the content determination ML model 10 are described next. The content determination ML model 10 may be or include a generative AI model (large language model, LLM) that may be hosted geographically co-located with the content retrieval platform 2, but may also be located remotely and accessible e.g. via a cloud service. Irrespective of the geographical location, the content determination ML model 10 is considered to form an operational part of the content retrieval platform 2 as the content determination ML model 10 is specifically trained and adapted to generate content to be returned by the content retrieval platform 2 in accordance with the parameters in the content retrieval request and user preferences and profiles represented by the UDE vector. The content determination ML model 10 according to the present disclosure may be based on various types of artificial intelligence algorithms, such as deep learning, neural networks, or other suitable algorithms.

Generally, in one way, the content determination ML model 10 is trained to determine user preferences from the received UDE vector in order to determine a content determination context. Training of content determination context may utilize the fact that users with similar preferences are likely to have similar UDE vectors. Hence, the content determination ML model 10 may be given relations between users with known preferences and corresponding UDE vectors to learn the meaning of UDE vectors. Training may particularly include supervised training which provides the content determination ML model 10 with input and expected output based on available historical data.

In another way, the content determination ML model 10 is also trained to generate at least a part of the content or at least facilitate content determination, e.g. by indicating data sources 4, 6, 9 holding or being able to generate the sought content and/or formulating adequate search queries. This aspect of training the content determination ML model 10 can be facilitated by historic real data, e.g. with the content originating from any existing data sources 4, 6, 9.

As already mentioned above with reference to FIG. 4, content determination may also include retrieving or computing activities 25A, 25B, 25C. In some embodiments, content determination 24 and retrieving or computing activities 25A, 25B, 25C may be combined by way of retrieval-augmented generation (RAG). RAG refines the output of a generative AI model (such as the content determination ML model 10) by additionally connecting the model to an authoritative knowledge base (e.g. one or multiple databases such as cache 9, database system 4 and provider system 6) beyond the original training data sources. By that, RAG extends the capabilities of generative AI models e.g. to specific domain knowledge held in traditional data sources without the need to retrain or further fine-tune the generative AI model.

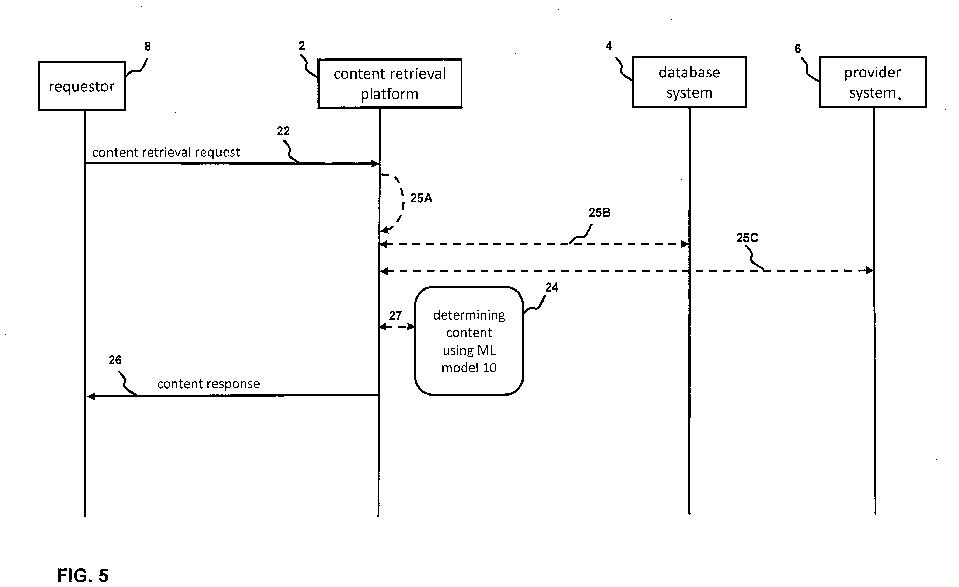

More specifically, as visualized by FIG. 5, in response to receiving a content retrieval request 22, the content retrieval platform 2 may use search parameters included in the content retrieval request to obtain content which may form a context for content generation by the content generation ML model 10. For example, if the content retrieval request indicates a start and end day of a vacation period as well as an origin, the content retrieval platform may retrieve from the database system 4 the current flight and train schedules from the origin to any destination (activity 25B in **FIG. 5**). In another exemplary scenario, retrieval procedure 25A, 25B, 25C may utilize the UDE vector associated with the content retrieval request to determine a pre-selection of content which was returned for similar user preferences and similar search parameters in the past.

In some embodiments, such retrieval procedures may utilize vector representations according to which the authoritative data is maintained in a vector format (vector database) and the search parameters are transformed into a vector representation to be included in the content retrieval query 25B in conformity with the vector representation in the vector database. Hence, retrieval procedure 25A, 25B, 25C may be a similarity search using high-dimensional vectors being mathematical representations of features or attributes. This is particularly beneficial herein if the UDE vector (or a part of the UDE vector) is utilized as input for the retrieval procedure 25A, 25B, 25C as the UDE vector is already in a format that can generally serve as an input vector for a vector database. For example, if the database system 4 is a vector database with previously determined content linked to UDE vectors and search parameters, a similarity search may be performed by transforming the search parameters of the content retrieval request 22 into an input vector and concatenating this input vector with the UDE vector to obtain an overall input vector for a vector-based similar retrieval.

The result of the retrieval 25A, 25B, 25C is then used to augment the original content retrieval request as well as the UDE vector (omitted in **FIG. 5** for brevity) and fed 27 together with the content retrieval request 22 and the UDE vector into the content determination ML model 10. By this, reliability and accuracy of the generated content using the content generation ML model 10 can be further increased (no/less hallucination, adequate level of specificity).

In order to ensure performance and deterministic response times (also vis-à-vis the requesting client 8), the content determination ML model 10 may run on special hardware and a dedicated platform. For example, the content determination ML model 10 may be executed on a hardware-accelerated platform, besides one of more Central Processing Units (CPU) equipped with a number of specialized processors specifically arranged for the execution of AI-related operations. For example, the hardware platform of the content determination ML model 10 may include a number of Graphics Processing Units (GPU) and/or Tensor Processing Units (TPU) which execute particular operations such as matrix multiplications to generate the output of the content determination ML model 10. Thus, in such embodiments, the content retrieval platform 2 may include heterogenous computer architectures, namely a traditional architecture with one or more CPUs responsible for traditional computer-implemented functionalities such as receiving and processing content retrieval requests and forming and sending content responses, and a specific architecture for AI-related functionalities utilizing GPUs and/or TPUs to implement the content determination ML model 10.

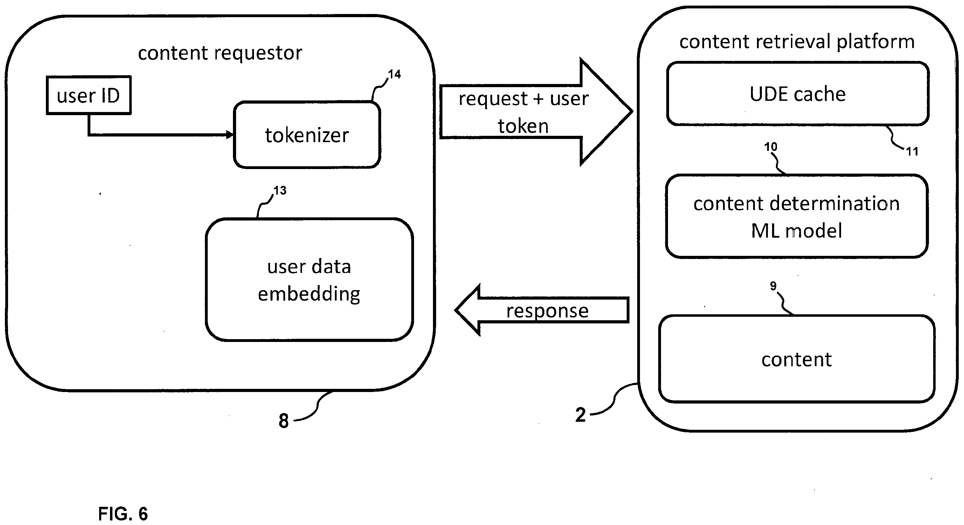

Now with reference to **FIG. 6****,** in some embodiments, the content retrieval request is an initial content retrieval request. In this event, the at least one requestor node 8 may send the anonymized and compressed representation of the profile (UDE vector) and an anonymous identification (also referred as user token) together with the initial content request to the content retrieval platform 2. The user token is generated by a tokenizer 14 at the requestor node 8 and identifies the user and, at least implicitly, the UDE vector representing the data of the user. The content retrieval platform 2 receives the anonymized and compressed representation of the profile (UDE vector) and the anonymous identification (user token) together with the initial content retrieval request and stores the anonymous identification together with the anonymized and compressed representation of the profile.

The user token serves the purpose to identify the UDE vector associated with the content retrieval request and either sent as a part or in a separate message alongside the content retrieval request (cf. e.g. **FIG. 4**). The user token is anonymous as the user token is e.g. a random identifier with the side condition that the random user token is unique within the content provision system 1. The uniqueness within the content provision system 1 ensures that multiple user tokens identify different UDE vectors. However, it is noted that the anonymous identifier does not need to be absolutely unique, in particular not across multiple different instances of a content provision system 1. For example, the same user token can identify a first UDE vector in one instance of a content provision system 1 and another UDE vector in another instance of a content provision system 1. Known measures to ensure such uniqueness of the user token may be taken, such as the concept of a 128 bits long Universally Unique Identifier (UUID) as laid out by RFC 4122 which generates an identifier / token based on time, clock sequence and node identity. Other implementations are possible as well,e.g. in use cases and systems where shorter tokens are sufficient to ensure uniqueness to a sufficient likelihood.

UDE vector identification by the anonymous identification (user token) may help to reduce the network traffic between any requestor node 8 and the content retrieval platform 2. To this end, after reception of the user token, the content retrieval platform 2 stores the user token in a UDE cache 11 with a reference to the associated UDE vector. The UDE cache 11 is e.g. a key-value store, where the key is the unique user token and the value is the associated UDE vector. This storage mechanism allows the content retrieval platform 2 to access the UDE vector for subsequent content retrieval requests that are associated with the same unique user token. In future request/response traffic for content retrieval of the particular user, the user token then can replace the UDE vector, the latter one is then not needed to be exchanged between the requestor node 8 and the content retrieval platform 2.

Hence, in some embodiments, the requestor node 8 sends a further content request together with the anonymous identification to the content retrieval platform 2. The content retrieval platform 2 receives the further content retrieval request together with the anonymous identification, retrieves the stored anonymized and compressed representation of the profile by using the received anonymous identification, and inputs the retrieved anonymized and compressed representation of the user profile and the further content retrieval request to the content determination ML model 10 to determine content in response to the further content retrieval request.

By utilizing the user token, the further content retrieval request is not required to indicate the UDE vector anymore. The user token is typically substantially smaller in terms of byte size. For example, a UDE vector with 1024 values may have a size of 1 kByte, while a user token may only have the size of e.g. 128 Bit. Hence, indicating the user token instead of the UDE vector saves network bandwidth, in particular in systems with many users and many content retrieval requests exchanged. In order to include the user token into the further content retrieval request, the requestor node 8 stores the same association between UDE vector and the user token as maintained in the UDE cache 11 at the content retrieval platform 2. Both, the UDE vector as well as the optional user token are not easily reversible in order to protect personal information of the user, in particular the user's identity. In addition, to facilitate data protection, content stored in the UDE cache 11 may be additionally encrypted.

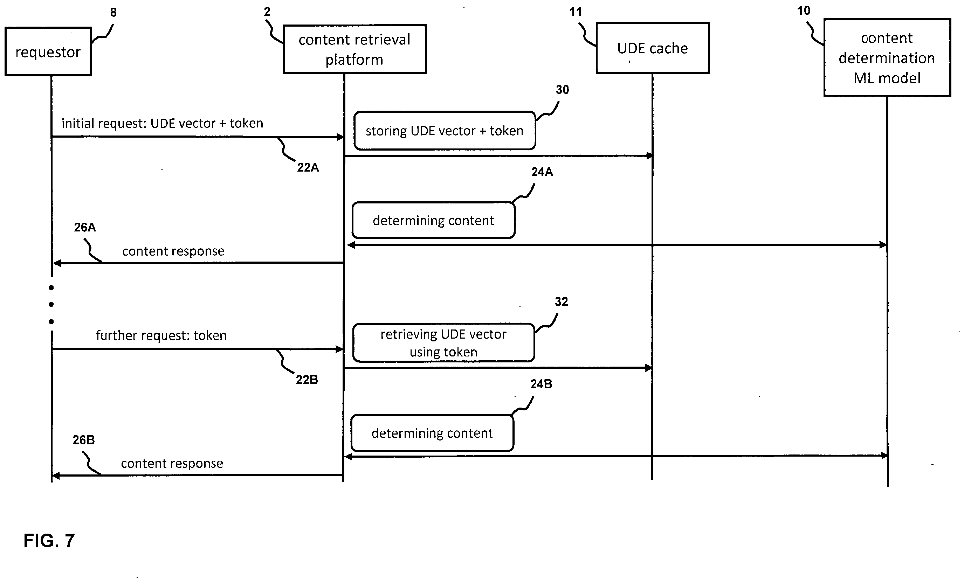

An alternative representation of these procedures is given by the message sequence chart of **FIG. 7****.** As described above, an initial content retrieval request is sent 22A by the requestor node 8 and received by the content retrieval platform 2. The initial content retrieval request carries search parameters defining sought content, the UDE vector and the user token. Note that the term initial does not necessarily imply a very first content retrieval request for the requestor node 8 and/or the user. Rather, the notion of initial refers to a situation in which the content retrieval platform 2 may not yet have received any UDE vector or a current version of the UDE vector for the particular user, or may not yet store a UDE vector for the particular user in the UDE cache 11, e.g. because no content retrieval request for the particular user has been received for at least a given amount of time and any earlier UDE vector for the particular user may have been purged from the UDE cache 11.

The content retrieval platform 2 stores 30 the UDE vector and the token in the UDE cache 11. The content retrieval platform then determines 24A the content using the search parameters in the content retrieval request and the UDE vector in the described way by utilizing content determination ML model 10 and returns 26A the determined content.

Then, after some time may have elapsed, the requestor node 8 sends 22B another content retrieval request for the same user. This further content retrieval request now does not contain the UDE vector, but indicates the user preferences by way of the user token. The content retrieval platform 2 receives the further content retrieval request and uses the user token to locate and retrieve 32 the UDE vector from the UDE cache 11. The content retrieval platform 2 then proceeds to determine 24B and return 26B the content for the further content retrieval request in the same manner as described above. The same procedure may then be employed for any further subsequent content retrieval request for the particular user.

Generally, the UDE vector remains unchanged unless there is an update to the user's data, user profile, preference data, etc. which underlies the UDE vector. Hence, the UDE vector, once generated by the user data embedding ML model 13 at the requestor node 8, remains valid until any update of the user data underlying the UDE vector.

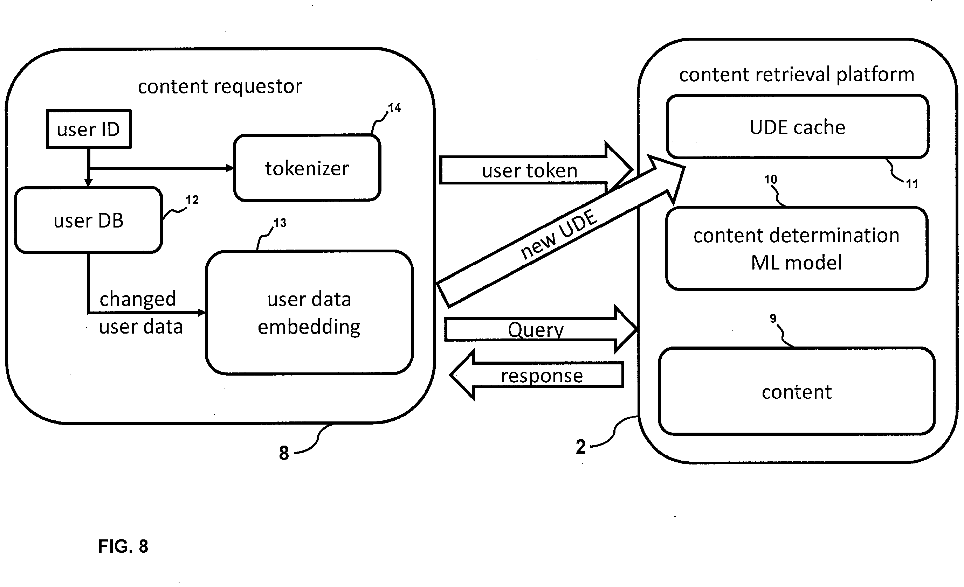

However, now with reference to **FIG. 8****,** an update of the user data underlying the UDE vector usually triggers an update of the UDE vector at the requestor node 8. The requestor node 8 determines a change of the user data and generates, by using the user data embedding ML model 13 inputting the changed user data, an updated anonymized and compressed representation of the profile, i.e. an updated UDE vector. The updated UDE vector represents the previously updated user data.

With a subsequent content retrieval request or independently from any content retrieval request, the updated UDE vector ("new UDE") is to be provided to the content retrieval platform 2 in order to make the content retrieval platform 2 aware of the updated user preferences, profile, etc. Thus, the requestor node 8 sends a still further content retrieval request together with the updated anonymized and compressed representation of the profile and, optionally, the anonymous identification (user token) to the content retrieval platform 2. Accordingly, the content retrieval platform 2 receives the still further content retrieval request together with the updated anonymized and compressed representation of the profile and the anonymous identification. The content retrieval platform 2 replaces, using the anonymous identification, the previously stored anonymized and compressed representation of the profile with the received updated anonymized and compressed representation of the profile in order to maintain the updated UDE vector for still further future content retrieval requests. As previously described, the content retrieval platform 2 then inputs the updated anonymized and compressed representation of the user profile and the still further content retrieval request to the content determination machine-learning model to determine content in response to the still further content retrieval request.

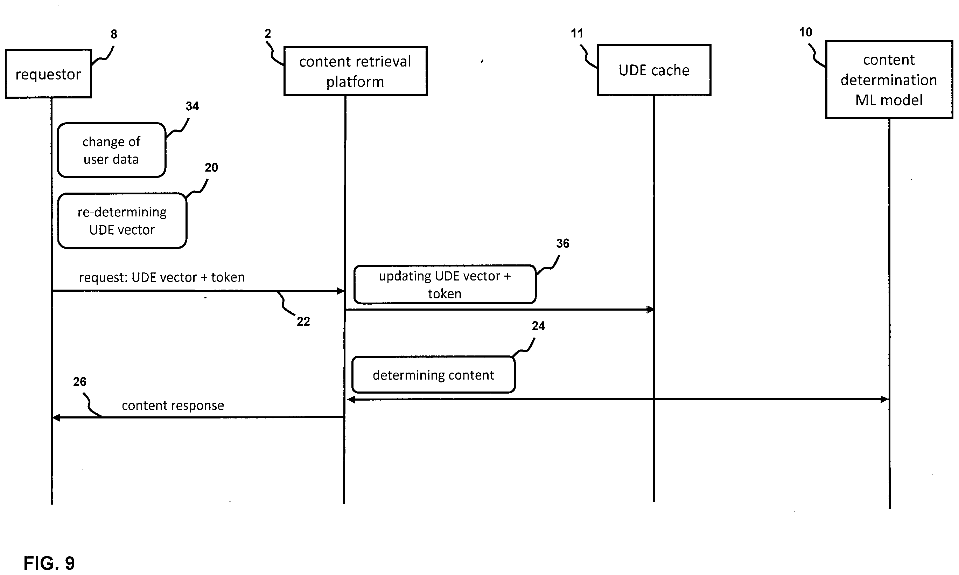

**FIG. 9** visualizes this functionality by way of message exchange between the requestor node 8 and the content retrieval platform 2. The depicted scenario occurs, for example, at a time after the message exchange of **FIG. 7****.** At some point of time, the requestor node 8 determines that a part of the user data underlying the already existing UDE vector has changed. For example, the user may have specified a new preference, changed a previously specified preference, new historic data implying a modification of user preferences has become available, personal data of the user has changed, the user has modified privacy settings of the user data so that the user data input vector to the UDE model 13 includes additional or less elements, etc. The determination of changed user data 34 may be implemented by a (e.g. periodic) monitoring of the user database 12 or the requestor node 8 may be explicitly notified by the user database 12 of any potentially relevant user data change.

The determination of changed user data 34 triggers a re-determination 20 of the UDE vector by using the UDE ML model 13. Generally, re-determination 20 is similar to a very first determination 20 of the UDE vector. The relevant user data is fed into the UDE ML model 13 according to the defined data structure (an example has been provided above). The UDE ML model 13 generates and outputs the updated UDE vector.

The updated UDE vector can then be sent 22 to the content retrieval platform 2 with the next content retrieval request. The content retrieval request typically also includes the user token, at least in embodiments in which the user token is utilized and a UDE vector - user token pair was already stored at the UDE cache 11 of the content retrieval platform 2. Including the user token in the content retrieval request enables the content retrieval platform 2 to lookup the previously stored UDE vector and replace/update 36 the previously stored UDE vector with the update UDE vector in the UDE cache 11. Hence, the user token does not undergo any change, but remains valid despite the change of the user data.

Content determination 24 and returning 26 the determined content is performed in the same manner as already described above. Details are not repeated here for the sake of brevity.

Non-limiting use cases that can be envisaged for the present methodologies include online web shops offering products and services, navigation systems, and network routing. Further use cases relate to search engines, recommendation systems, content management systems, expert systems, log systems, big data system, or other systems that require efficient content retrieval request processing and seek to minimize back-and-forth message exchange between clients (requestor nodes) and servers (content retrieval platforms). The present methodologies may be applied to various domains, such as e-commerce, social media, news, travel, entertainment, or other suitable domains. The particular content, data structures, data fields, parameters, values, keys, records, request/response protocol, organization of the content stored at the content retrieval platform 2 and its internal database or cache 9, the database systems 4, and provider systems 6, depend on the particular use case, and the present methodologies are applicable to all sorts of these aspects.

Overall, the present methodologies enable a content retrieval platform 2 to efficiently handle content retrieval requests in terms of processing resources and response times involved. Efficiency is promoted by being able to customize sought content based on user preferences, user profiles and/or other requestor-specific data which can avoid or reduce multiple search iterations. The customized content delivery is achieved without compromising user privacy, namely by use of UDE vectors allowing for the application of federated learning, which ensures that personal and sensitive data remain local at the requestor node 8. The content provision system 1 maintains a cache of stored UDE vectors and corresponding anonymous user tokens, providing an efficient method of managing user data.

Note that the present methodologies as described above, if applied by a content retrieval platform 2, do not necessarily have to be applied for all search requests received by the content retrieval platform 2. For example, the content retrieval platform 2 may apply the methodologies for some types of content retrieval requests, but may not apply the methodologies for other types of content retrieval requests which are then handled in a traditional manner. Or the content retrieval platform 2 may apply the methodologies for content retrieval requests from some requestor nodes 8, but not for content retrieval requests from other requestor nodes 8. Or the content retrieval platform 2 may apply the methodologies during some periods of time, but not during other periods of time, etc.

As mentioned above, the present methodologies may be provided by a computer-implemented method, by an apparatus such as a controller as well as by computer program instructions which, when executed by at least one processor, realizes the operations described above.

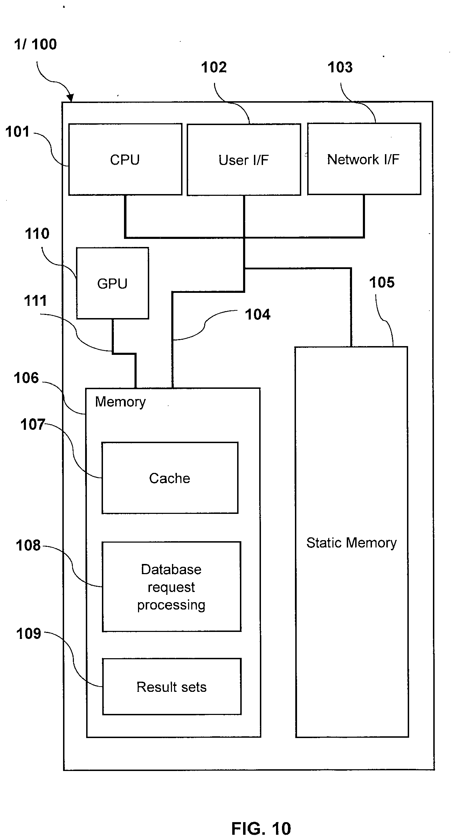

**FIG. 10** is a diagrammatic representation of the internal components of a computing machine 100 implementing the functionality of the content retrieval platform 2. The computing machine 100 includes a set of instructions to cause the computing machine 100 to perform any of the methodologies discussed herein when executed by the computing machine 100. The computing machine 100 includes at least one processor 101, a main memory 106 and a network interface device 103 which communicate with each other via a bus 104. Optionally, the computing machine 100 may further include a static memory 105 and a disk-drive unit. A display, an alpha-numeric input device and a cursor control device may be provided as examples of user interface 102. The network interface device 103 connects the computing machine 100 implementing the content retrieval platform 2 with a requestor node 8 as well as the other entities such as the database systems 4 and/or the provider systems 6.

Computing machine 100 includes a memory 106 such as main memory, random access memory (RAM) and/or any further volatile memory. The memory 106 may store temporary data and program data 107 to facilitate the functionality of the content retrieval platform 2, including program data to realize receiving 21 the UDE vector, receiving 22 the content retrieval request, determining 24, 25 content and returning 26 the content response. In addition, the memory 106 may store temporary data and program data 107 to realize the other optional functionalities of the content retrieval platform 2 described herein.

A set of computer-executable instructions embodying any one, or all, of the methodologies described herein, resides completely, or at least partially, in or on a machine-readable storage medium, e.g., in the static memory 105 or, when loaded and being executed, in the main memory 106. For example, the instructions may include software processes implementing the content retrieval request processing functionality of the content retrieval platform 2. The instructions may further be transmitted or received as a propagated signal via the Internet through the network inter-face device 103 or via the user interface 102. Communication within computing machine 100 is performed via a bus 104. Basic operation of the computing machine 100 is controlled by an operating system which is also located in the memory 106, the at least one processor 101 and/or the static memory 105.

As mentioned above, the computing machine 100 may also be equipped with a graphical processing unit (GPU) 110 or multiple GPUs in order to specifically implement ML-related and/or neural-network-related operations such as matrix multiplications to generate the output of the content determination ML model 10. The GPU 110 may be arranged to directly access the memory 106 via a GPU bus 111.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently. Moreover, any of the flowcharts, sequence diagrams, and/or block diagrams may include more or fewer blocks than those illustrated consistent with embodiments and examples.

The terminology used herein is for the purpose of describing particular embodiments and examples, and is not intended to be limiting. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details.

## Claims

1. A method for content provision performed by a content provision system, the content provision system comprising a content retrieval platform and at least one requestor node, wherein the at least one requestor node hosts a user data embedding machine-learning model and the content retrieval platform hosts a content determination machine-learning model, the method comprising:
- generating, by the at least one requestor node using the user data embedding machine-learning model inputting user data of a user profile, an anonymized and compressed representation of the user profile,
- sending, by the at least one requestor node, the anonymized and compressed representation of the user profile to the content retrieval platform,
- sending, by the at least one requestor node, a content retrieval request related to the user profile to the content retrieval platform,
- receiving, by the content retrieval platform, the anonymized and compressed representation of the user profile and the content retrieval request,
- inputting, by the content retrieval platform, the anonymized and compressed representation of the user profile and the content retrieval request to the content determination machine-learning model to determine content in response to the content retrieval request,
- returning, by the content retrieval platform, the determined content to the at least one requestor node.

2. The method of claim 1, wherein the content retrieval request is an initial content retrieval request, the method comprising:
- sending, by the at least one requestor node, the anonymized and compressed representation of the user profile and an anonymous identification together with the initial content retrieval request to the content retrieval platform,
- sending, by the at least one requestor node, a further content retrieval request related to the user profile together with the anonymous identification to the content retrieval platform,
- receiving, by the content retrieval platform, the anonymized and compressed representation of the user profile and an anonymous identification together with the initial content retrieval request to the content retrieval platform and storing the anonymous identification together with the anonymized and compressed representation of the user profile,
- receiving, by the content retrieval platform, the further content retrieval request together with the anonymous identification,
- retrieving, by the content retrieval platform, the stored anonymized and compressed representation of the profile by using the received anonymous identification,
- inputting, by the content retrieval platform, the retrieved anonymized and compressed representation of the user profile and the further content retrieval request to the content determination machine-learning model to determine content in response to the further content retrieval request.

3. The method of claim 2, further comprising
- determining, at the at least one requestor node, a change of the user data,
- generating, by using the user data embedding machine-learning model of the at least one requestor node inputting the changed user data, an updated anonymized and compressed representation of the user profile,
- sending, by the at least one requestor node, a still further content retrieval request together with the updated anonymized and compressed representation of the user profile and the anonymous identification to the content retrieval platform,
- receiving, at the content retrieval platform, the still further content retrieval request together with the updated anonymized and compressed representation of the user profile and the anonymous identification,
- replacing, by the content retrieval platform using the anonymous identification, the stored anonymized and compressed representation of the user profile with the received updated anonymized and compressed representation of the user profile,
- inputting, by the content retrieval platform, the updated anonymized and compressed representation of the user profile and the still further content retrieval request to the content determination machine-learning model to determine content in response to the still further content retrieval request.

4. The method of any one of claims 1 to 3, wherein the at least one requestor node comprises at least one of an end user device, a smartphone, an intermediate provider platform communicatively coupled to at least one client device, a cloud computing service.

5. The method of any one of claims 1 to 4, wherein the user data of the user profile is indicative of earlier content retrieval requests, generated and returned content in response to the earlier content retrieval requests, client selections of the generated and returned content in response to the earlier content retrieval requests.

6. The method of any one of claims 1 to 5, wherein the anonymized and compressed representation of the user profile comprises a multi-dimensional feature vector with a value per dimension, wherein each value of the feature vector is indicative of a parameter of the user profile, a user preference, or an absence of a user profile parameter or of a user preference.

7. The method of any one of claims 1 to 6, wherein the user data embedding machine-learning model is trained at the at least one requestor and the content determination machine-learning model is trained at the content retrieval platform.

8. A content provision system comprising a content retrieval platform and at least one requestor node, wherein the at least one requestor node hosts a user data embedding machine-learning model and the content retrieval platform hosts a content determination machine-learning model,
wherein the at least one requestor node is arranged to
- generate, by using the user data embedding machine-learning model inputting user data of a user profile of the requestor node, an anonymized and compressed representation of the user profile,
- send the anonymized and compressed representation of the user profile to the content retrieval platform,
- send a content retrieval request related to the user profile to the content retrieval platform,
wherein the content retrieval platform is arranged to
- receive the anonymized and compressed representation of the user profile and the content retrieval request,
- input the anonymized and compressed representation of the user profile and the content retrieval request to the content determination machine-learning model to determine content in response to the content retrieval request,
- return the determined content to the at least one requestor node.

9. The content provision system of claim 8, wherein the content retrieval request is an initial content retrieval request and wherein the at least one requestor node is arranged to
- send the anonymized and compressed representation of the user profile and an anonymous identification together with the initial content retrieval request to the content retrieval platform,
- send a further content retrieval request related to the user profile together with the anonymous identification to the content retrieval platform,
wherein the content retrieval platform is further arranged to
- receive the anonymized and compressed representation of the user profile and an anonymous identification together with the initial content retrieval request to the content retrieval platform and store the anonymous identification together with the anonymized and compressed representation of the user profile,
- receive the further content retrieval request together with the anonymous identification,
- retrieve the stored anonymized and compressed representation of the user profile by using the received anonymous identification,
- input the retrieved anonymized and compressed representation of the user profile and the further content retrieval request to the content determination machine-learning model to determine content in response to the further content retrieval request.

10. The content provision system of claim 9, wherein the at least one requestor node is further arranged to
- determine a change of the user data of the user profile,
- generate, by using the user data embedding machine-learning model inputting the changed user data of the user data, an updated anonymized and compressed representation of the user profile,
- send a still further content retrieval request related to the user profile together with the updated anonymized and compressed representation of the user profile and the anonymous identification to the content retrieval platform,
wherein the content retrieval platform is further arranged to
- receive the still further content retrieval request together with the updated anonymized and compressed representation of the user profile and the anonymous identification,
- replace, using the anonymous identification, the stored anonymized and compressed representation of the user profile with the received updated anonymized and compressed representation of the user profile,
- input the updated anonymized and compressed representation of the user profile and the still further content retrieval request to the content determination machine-learning model to determine content in response to the still further content retrieval request.

11. The content provision system of any one of claims 8 to 10, wherein the at least one requestor node comprises at least one of an end user device, a smartphone, an intermediate provider communicatively coupled to at least one the client device, a cloud computing service.

12. The content provision system of any one of claims 8 to 11, wherein the user data of the user profile is indicative of earlier content retrieval requests, generated and returned content in response to the earlier content retrieval requests, client selections of the generated and returned content in response to the earlier content retrieval requests.

13. The content provision system of any one of claims 8 to 12, wherein the anonymized and compressed representation of the user profile comprises a multi-dimensional feature vector with a value per dimension, wherein each value of the feature vector is indicative of a parameter of the user data, a user preference, or an absence of a user profile parameter or of a user preference.

14. The content provision system of any one of claims 8 to 13, wherein the user data embedding machine-learning model is trained at the at least one requestor and the content determination machine-learning model is trained at the content retrieval platform.

15. A computer program with program instructions that cause execution of the method of any one of claims 1 to 8 when executed on a computer.
